# EUROPEAN PATENT SPECIFICATION

(11) **EP 4 645 239 B1**
(45) Date of publication and mention of the grant of the patent: **07.10.2026**
(21) Application number: 25203898.9
(22) Date of filing: 21.01.2013
(51) Int. Cl.: G06V 20/13, G06V 20/64, G06V 10/75, G06V 20/10, G06V 10/80, G01C 11/02, G06T 17/05, G06F 18/25, G06F 16/29, G06T 7/30, G01C 11/06

(54) **METHOD AND SYSTEM FOR GEO-REFERENCING AT LEAST ONE SENSOR IMAGE**
VERFAHREN UND SYSTEM ZUR GEOREFERENZIERUNG MINDESTENS EINES SENSORBILDES
PROCÉDÉ ET SYSTÈME DE GÉORÉFÉRENCEMENT D'AU MOINS UNE IMAGE DE CAPTEUR

(43) Date of publication of application: 05.11.2025
(62) Document number(s) of the earlier application(s) in accordance with Art. 76 EPC: 13871515.6 / 2 946 366
(73) Proprietor: Vantor Sweden AB, 582 13 Linköping (SE)
(72) Inventor: ISAKSSON, Folke, Sturefors (SE); BEJERYD, Johan, 582 44 LINKÖPING (SE); CARLBOM, Per, 582 46 LINKÖPING (SE); ANDERSSON, Ingmar, 583 34 Linköping (SE); BORG, Johan, LINKÖPING (SE); HAGLUND, Leif, Brokind (SE)
(74) Representative: Zacco Sweden AB

(56) References cited:
- WO-A1-2012/126500
- US-A1- 2005 220 363
- US-A1- 2008 089 558
- SHEIKH Y ET AL: "Video Registration,Geodetic Alignment of Aerial Video Frames", 1 May 2003 (2003-05-01), XP002500770, ISBN: 978-1-4020-7460-8, Retrieved from the Internet <URL:http://www.crcv.ucf.edu/papers/shah/YaserChapter.pdf> [retrieved on 20160824]
- JAN BÖHM ET AL: "Efficient Integration of Aerial and Terrestrial Laser Data for Virtual City Modeling using Lasermaps", INTERNET CITATION, 12 September 2005 (2005-09-12), pages 192 - 197, XP002507266, Retrieved from the Internet <URL:http://www.commission3.isprs.org/laserscanning2005/papers/192.pd> [retrieved on 20081201]
- LLOYD L. COULTER ET AL: "Assessment of the Spatial Co-registration of Multitemporal Imagery from Large Format Digital Cameras in the Context of Detailed Change Detection", SENSORS, vol. 8, no. 4, 28 March 2008 (2008-03-28), pages 2161 - 2173, XP055297495, DOI: 10.3390/s8042161
- HAIFENG CHEN ET AL: "Model based object recognition by robust information fusion", PATTERN RECOGNITION, 2004. ICPR 2004. PROCEEDINGS OF THE 17TH INTERNAT IONAL CONFERENCE ON CAMBRIDGE, UK AUG. 23-26, 2004, PISCATAWAY, NJ, USA,IEEE, LOS ALAMITOS, CA, USA, vol. 3, 23 August 2004 (2004-08-23), pages 57 - 60, XP010724600, ISBN: 978-0-7695-2128-2, DOI: 10.1109/ICPR.2004.1334468
- CASS T A ED - BOYKOV YURI ET AL: "POLYNOMIAL-TIME GEOMETRIC MATCHING FOR OBJECT RECOGNITION", ARXIV.ORG, CORNELL UNIVERSITY LIBRARY, 201 OLIN LIBRARY CORNELL UNIVERSITY ITHACA, NY 14853, vol. 21, no. 1/02, 1 January 1997 (1997-01-01), pages 37 - 61, XP000682560, DOI: 10.1023/A:1007971405872
- ALTER T D ET AL: "UNCERTAINTY PROPAGATION IN MODEL-BASED RECOGNITION", ARXIV.ORG, CORNELL UNIVERSITY LIBRARY, 201 OLIN LIBRARY CORNELL UNIVERSITY ITHACA, NY 14853, vol. 27, no. 2, 1 March 1998 (1998-03-01), pages 127 - 159, XP000755414, DOI: 10.1023/A:1007989016491

## Description

### TECHNICAL FIELD

The present invention relates to a method and system for geo-referencing at least one sensor image

### BACKGROUND ART

US 2003/0218675 describes a video picture processing method intending to take a shot of a ground surface from a video camera mounted on an airframe in the air and identify situations existing on the ground surface. The method comprises the steps of specifying three-dimensionally a photographic position in the air, computing a photographic range of the ground surface having been shot; transforming a video picture in conformity with the photographic range; and displaying the transformed picture in such a manner as being superimposed on a map of a geographic information system. US2005/220363A1 (OLDROYD LAWRENCE A [US]) 6 October 2005 constitutes relevant prior art as well.

### SUMMARY OF THE INVENTION

One object of the present invention is to provide improved accuracy in the geo-referencing of a picture or sensor image. Another object of the present invention is to provide a measure of the accuracy of the geo-referencing of the image.

This has in one example been achieved by means of a method for geo-referencing at least one sensor image. The method comprises generating said at least one sensor image of a first scene with at least one sensor, accessing a 3D model of the environment comprising geo-coded 3D coordinate data and related to at least one second scene, said second scene encompassing said first scene, matching the sensor image with the 3D model find a section of the 3D model where there is a match between the first and the second scenes, geo-referencing the sensor image based on the geo-coded 3D coordinate data of the found section of the 3D model, and determining a measure related to an uncertainty in the matching between the sensor image and the 3D model. The matching may involve positioning and rotating the sensor image in the 3D model. The geo-coded 3D coordinate data may be given in a geo-referenced coordinate system.

In using the method for geo-referencing, the quality of the geo-referencing of a sensor image using the 3D model, can be certified. The user can evaluate whether provided geographical position information related to the sensor image data is reliable (enough)

In one option, the measure related to the uncertainty in the matching is determined for the sensor image as a whole. The measure related to the uncertainty in the matching in one example determined as a distance value and in another example determined as a percentage.

In one option, the method comprises determining a similarity between the sensor image and the found section of the 3D model, determining similarities between the sensor image and sections of the model adjacent to the found section and determining the measure related to the uncertainty based on a comparison between the determined similarities.

In one option, the step of determining a measure related to an uncertainty comprises comparing substantially all points in the sensor image with a corresponding point in the model and forming an accuracy measure based on the distance between each respective point in the sensor image and the corresponding point in the model.

In one option, the determination of the measure related to an uncertainty comprises comparing the sensor image with the corresponding section in the 3D model and determining a probability that the matching between the model and the sensor image is correct.

The measure related to an uncertainty may instead or in addition be provided for each of at least one point in the sensor image. In one option in accordance with this embodiment, the measure related to the uncertainty comprises comparing at least one point in the sensor image with a corresponding point in the 3D model and forming the measure related to the uncertainty based on the distance between the at least one point in the sensor image and the corresponding point in the model.

In one option, the determining of the measure related to the uncertainty is based on a determined model uncertainty.

The method comprises in one option a step of extracting the coordinate information and the associated measure related to the uncertainty related to a selected point in the sensor image. The 3D model of the environment may comprise a mesh describing the environment and comprising nodes interconnected by means of edges and surfaces boarded by the edges, wherein each node and/or edge and/or surface is associated to geo-coded 3D coordinate data and the associated measure related to the uncertainty. The 3D model, such as in the example with a mesh, may be textured.

In one embodiment of the present invention a program code for geo-referencing at least one sensor image comprises the following steps.
- generating said at least one sensor image of a first scene with at least one sensor,
- accessing a 3D model of the environment comprising geo-coded 3D coordinate data and related to at least one second scene, said second scene encompassing said first scene,
- matching the sensor image with the 3D model find a section of the 3D model where there is a match between the first and the second scenes,
- geo-referencing the sensor image based on the geo-coded 3D coordinate data of the found section of the 3D model, and
- determining a measure related to an uncertainty in the matching between the sensor image and the 3D model.

In one example, a computer program product comprising a program code stored on a computer readable media for geo-referencing at least one sensor image and comprising the following steps.
- generating said at least one sensor image of a first scene with at least one sensor,
- accessing a 3D model of the environment comprising geo-coded 3D coordinate data and related to at least one second scene, said second scene encompassing said first scene,
- matching the sensor image with the 3D model find a section of the 3D model where there is a match between the first and the second scenes,
- geo-referencing the sensor image based on the geo-coded 3D coordinate data of the found section of the 3D model, and
- determining a measure related to an uncertainty in the matching between the sensor image and the 3D model.

In one embodiment of the present invention, a system for geo-referencing at least one sensor image comprises at least one sensor arranged to capture at least one image of the first scene, means for accessing a 3D model comprising geo-coded 3D coordinate data, and a processing unit arranged to accessing the 3D model, to match the sensor image with the 3D model so as to find a section of the 3D model where there is a match, to geo-reference the sensor image based on the geo-coded 3D coordinate data of the found section of the 3D model, and to determine a measure related to an uncertainty in the matching between the sensor image and the 3D model.

### BRIEF DESCRIPTION OF THE DRAWINGS

Fig 1 illustrates schematically a first moving image sensor carrying platform.
Fig 2 is a block scheme illustrating an example of a system for geo-referencing a sensor image.
Fig 3 illustrates schematically a first example of determining an accuracy related to the geo-referencing of a sensor image based on a sensor image and a corresponding 3D model section.
Fig 4 illustrates schematically a second example of determining an accuracy related to the geo-referencing.
Fig 5 is a schematic illustration of an example of a 3D model.
Fig 6 is a schematic illustration of an uncertainty related to a 3D model
Fig 7 is a flow chart illustrating an example of a method for geo-referencing a sensor image.

### DETAILED DESCRIPTION

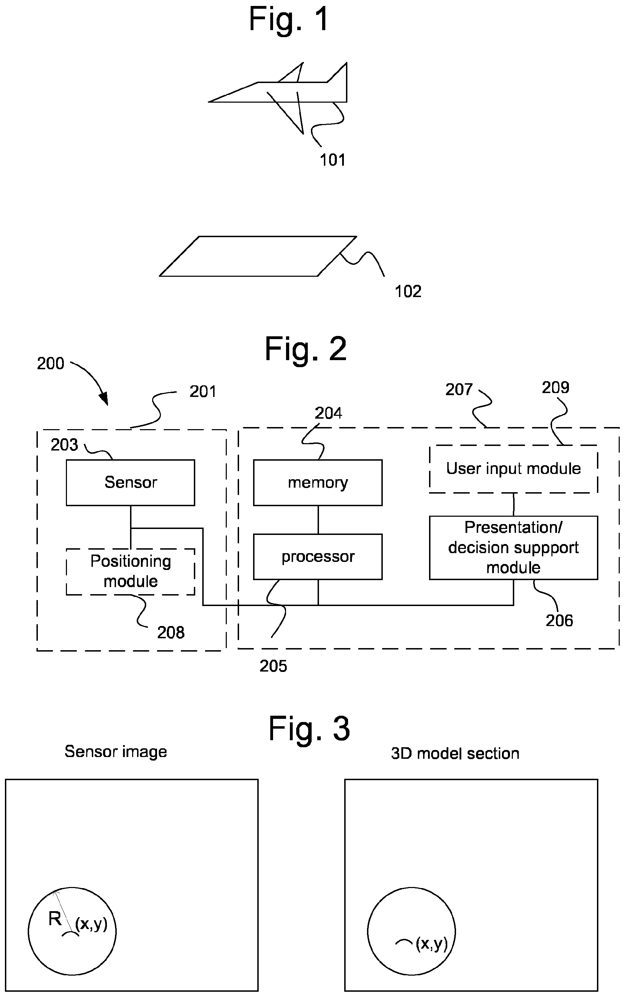

In Fig. 1, an object forming a sensor carrier 101 or a sensor carrying platform is moving in a terrain. In the illustrated example, the object is an aerial object. The aerial object is for example a manned aerial vehicle or an unmanned aerial vehicle. The aerial vehicle may be a helicopter, an aircraft or the like. The object may also be for example land based. The object may be a person or an animal.

The sensor carrier 101 carries a sensor arranged to generate a sensor image of a scene with at least one sensor. The sensor is arranged to captures images of a first scene 102. In one example the sensor is arranged to continuously capture images of the first scene as the sensor carrying object is moving. In one example, the sensor is arranged to scan the terrain. The sensor may be a video camera. The sensor may in an alternative example be arranged to capture images of the scene at preset time intervals or in a single shot.

The generated sensor images can then be geo-referenced. This involves accessing a 3D model of the environment comprising geo-coded 3D coordinate data and related to a second scene. The second scene encompasses the first scene. The sensor image is matched with the second scene to find a corresponding section of the second scene. Further, accuracy in the matching between the sensor image and the found section of the model is determined.

In Fig. 2, a system 200 comprises a sensor carrier 201 carrying an image sensor 203.

The sensor carrier 201 may also comprise a positioning module 208. The positioning module may comprise equipment for determining the position of the sensor carrier 201 in a geo-referenced coordinate system. The equipment for determining the position of the sensor carrier 201 comprises for example a GPS receiver and/or accelerometers and/or gyros. The positioning module 208 may also comprise equipment for determining a pointing direction of the sensor(s) 203. Determining the pointing direction of a sensor is well known in the art and may be based on information from for example accelerometers and/or gyros. In one example, the positioning module comprises a user input module (not shown) for manual input of information related to the position of the sensor carrier and or the pointing direction of the sensor.

A processing module 205 is arranged to receive information from the positioning module related to the position of the sensor carrier and possibly also the pointing direction of the sensor(s) carried by the sensor carrier. The processing module 205 has access to a 3D model of the environment. In the illustrated example, the 3D model is stored in a memory 204. In one example, the 3D model is at least partly stored in a memory at a remote location. The processing module has access to those parts of the 3D module via a communication channel.

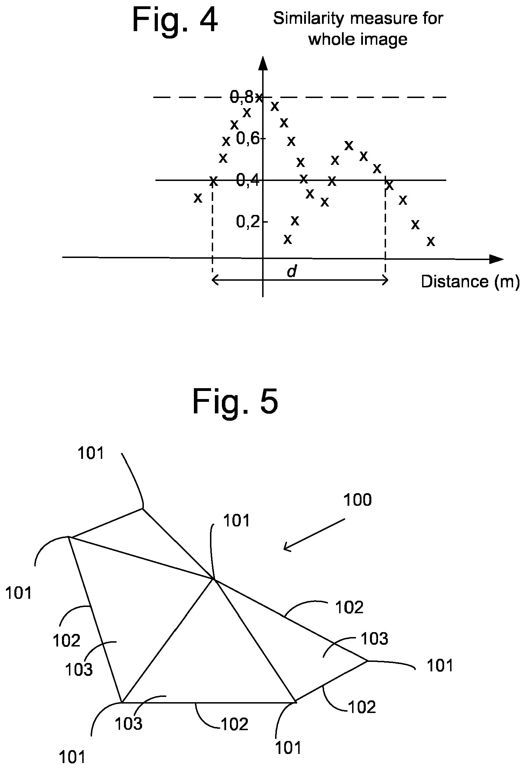

The 3D model comprises 3D coordinate data given in a geo-referenced coordinate system. The 3D model may further comprise texture information. The 3D model may comprise substantially all visible surfaces (above a certain size) in the surrounding seen from any angle. Thus, substantially all surfaces in the surrounding exceeding a certain size are associated to 3D coordinate data given in the geo-referenced coordinate system. Further, also texture data may be associated to all surfaces in the surrounding exceeding a certain size. The geo-referenced coordinate data may comprise latitude data, longitude data and height data and may be associated to texture information. A detailed example of a 3D model is described in relation to Fig 5.

The processing module 205 is arranged to extract from the 3D model data related to a second scene based on information provided from the positioning module 208. As is described above, the information from the positioning module comprises position information and possibly also information related to a moving direction of the sensor carrier and/or a pointing direction of the sensor. The processing module is arranged to select the second scene such that it is ensured that it encompasses the first scene. Thus, the size of the second scene is selected based on the uncertainty of the data from the positioning module 208. The processing module is arranged to perform processing of the sensor image and the 3D model data related to the second scene. The processing involves matching the sensor image with the 3D model data related to a second scene to map the sensor image onto the 3D model data related to the second scene. The matching involves positioning and rotating the sensor image in the model and changing intrinsic parameters such as field of view and/or radial distortion. The matching involves for example feature matching. The feature matching then involves matching identified features in the sensor image with texture information of the section of the 3D model related to the second scene.

The processing module 205 may further be arranged to identify discrepancies between the model and the information in the sensor image. The discrepancies may be identified by means of additional information. The additional information may comprise information relating to addition and/or removal of at least one object in the sensor image in relation to the corresponding 3D mode and/or information relating to at least one texture deviation in the sensor image in relation to the corresponding 3D model. The additional information may instead or in addition thereto comprise information related to a difference in shape and/or size of at least one object in the sensor image in relation to the corresponding 3D model. The information related to the texture information may for example comprise information related to if the sensor mage and the 3D model were provided at different seasons and/or weather conditions. The matching between the sensor image and the 3D model can then be performed based on the additional information.

When the matching has been performed, and the sensor image is matched a corresponding section in the second scene, the generated sensor image is then geo-referenced.

The processing module 205 is further arranged to determine a measure related to an uncertainty in the matching between the sensor image and the 3D model and thus in the geo-coded information associated to the sensor image as a result of the matching. The measure related to the uncertainty in the matching is one example determined for the sensor image as a whole. In an alternative or complementary example, the measure related to an uncertainty is provided for each of at least one point in the sensor image

In one example, the measure related to the uncertainty in the matching is determined as a distance value. In one example, the measure related to the uncertainty in the matching is determined as a percentage.

The processing module 205 may be implemented at the sensor carrier 201. However, it can also be implemented elsewhere. Alternatively, different parts of the processing module 205 may be formed on different locations. The 3D model may be stored as a whole or in part at the sensor carrier 201. Alternatively, it is stored elsewhere.

The system 2001 may comprise a presentation and/or decision support module 206 and a user input module 209. In one example, the presentation and/or decision support module comprises a display arranged to display the sensor image. The user input module 209 may then comprise for example a computer mouse or a touch screen on the display for marking a position or area in the displayed sensor image. The display and/or decision support module 206 is then arranged to extract coordinate information from the sensor image related to the selected position/area along with associated uncertainty measure. This coordinate information may then be used by other systems.

The display may then be arranged to display information related to a plurality of sensor images covering a wider geographical area. The user input module 209 may then, as described above, be used for marking an arbitrary position or area in the displayed sensor image and/or a position or area associated to additional information. The display and/or decision support module 206 is then arranged to extract coordinate information from the sensor image related to the selected position/area along with associated uncertainty measure. In one example, the display is arranged to display the sensor image in a map, wherein the 3D model of the memory 204 can be used for providing data to the displayed map surrounding the sensor image. The displayed sensor image may be continuously updated as the sensor carrier moves or the sensor is turned.

In Fig 3, it is illustrated one way of determining the uncertainty measure for the matching between the sensor image and the found section of the 3D model. In the illustrated example, a geo-coded sensor image and a matched section of the 3D model projected to two dimensions is shown.

In Fig 3, the procedure for determining the uncertainty in the matching between the sensor image and the found section of the model is illustrated for one coordinate in the geo-coded sensor image. However, in practice the accuracy is determined for a plurality of coordinates in the geo-coded sensor image. In one example, the accuracy is determined for all coordinates in the geo-coded sensor image.

In Fig 3, the accuracy is determined by matching a part of the geo-coded sensor image with a corresponding fraction 3D model. In the illustrated example, for each coordinate *x*, *y* of the geo-coded sensor image for which the accuracy of the positioning information is determined, an area around the examined coordinate *x*, *y* is formed. Characteristically, the area is substantially smaller than the size of the sensor image itself. In the illustrated example, the area is selected as a circle having a radius R and a centre at the examined coordinate *x*, *y.* The radius R may be defined as a predetermined number of pixels. A corresponding area in the corresponding model section is then searched for the corresponding location. The search is performed based on feature matching and/or correlation using techniques known in the art. The x, y coordinate of the corresponding location in the 3D model section is then compared to the coordinate x, y in the sensor image. Based thereon, the processing unit can be arranged to form a distance between the coordinates in the sensor image and the corresponding 3D model section. The distance *rᵢ* at coordinate *i* between the coordinates in the sensor image and the corresponding 3D model section can be defined as ${r}_{i} = \sqrt{{dx}^{2} +} {dy}^{2}$

The distance is then provided for N coordinates (or pixels) in the sensor image. In one example, the number N equals to the number of pixels in the sensor image. In alternative example, a subset of the pixels of the sensor image are selected for performing a distance value.

Then, a value for the accuracy of the geo-coding of the image can be formed based on the values rᵢ for *1<i≤N* and based on the number *N* of coordinates examined.

In one example, the accuracy value is determined as ${r}_{m} = \sqrt{\frac{{\sum }_{i = 1}^{N} {r}_{i}^{2}}{N}}$

In one example, the denominator of the equation above is another value based on the number *N* of coordinates examined. In one example the distances rᵢ are weighted in the sum so that the geo-coding accuracy is more important in some portions of the sensor image than in others.

The size of the area is selected such that the "average distance" represented by the accuracy value *rₘ* should lie well within the boarder of the area if the sensor image and the 3D model section relate to the same scene. The size of the area is selected based on the accuracy of the information from the position module. In one example, size of the area is selected based on the quality of the 3D model, the sensor image etc.. (When the area is the circle with the radius R, the average distance" represented by the accuracy value *rₘ* should be substantially smaller than the radius *R.* For example, the average distance" represented by the accuracy value *rₘ* should based on the selection of R be smaller than half of R. If *rₘ* is close to or equal to R, this is an indication that the sensor image and the 3D model selection do not correspond to the same scene in reality. Thus, the quota $\frac{{r}_{m}}{R}$ represents a measure of an uncertainty in the in the geo-coding of the sensor image.

Fig 4 illustrates another way of determining the accuracy in the geo-coded image. In the illustrated example, for illustrative purposes, the determination is performed in one plane. However, the same principle applied when performing the procedure in a plane. In accordance with this example, the same a similarity measure for the whole image and the corresponding 3D model section is determined. The similarity measure can be determined using any known technique. In the illustrated example a value for the similarity measure between the sensor image and the corresponding 3D model section is determined to be 0,8. Then, the similarity measure is then calculated for a plurality of "measurement points" wherein the 3D model section is displaced a determined displacement distance for each measurement. In this case the displacements are only made in one dimension. Thus, a plurality of measurement points are provided, one for each displacement of the 3D model section. Then, the uncertainty value in meters is then provided for the whole sensor image based on these similarity measurements.

In the illustrated example the uncertainty measure is determined as a distance d within which the similarity measure exceeds a predetermined value. In the illustrated the uncertainty measure is determined as one distance defined by the end point of one or a plurality of intervals within which the predetermined value is exceeded. The predetermined value may be determine as a percentage of the value determined for the selected 3D model (i.e., 0.8 in the illustrated example). The percentage is for example 50 percent.

In Fig. 5, a 3D model for describing an environment is formed as a mesh 100. The mesh 100 comprises a plurality of nodes 101 interconnected by means of edges 102. Surfaces 103 are provided boarded by the edges 102 of the mesh 100. The nodes 101 are each associated to a 3D coordinate in a geographical coordinate system. The surfaces 103 are in one example each associated to texture information. In one example, the surfaces are also each associated to 3D coordinate data in the geographical coordinate system. Further, a mesh uncertainty is associated to at least a subset of the nodes of the mesh. The mesh uncertainty associated to each respective node represents the uncertainty at that specific point of the model. In one example, the mesh uncertainty is associated to each node of the mesh.

Instead, or in addition thereto, at least a subset of the surfaces and/or edges can be associated to a mesh uncertainty. In one example, one mesh uncertainty is associated to each surface and/or edge. Alternatively, each surface and/or edge is associated to a plurality of mesh uncertainty values. For example, the mesh uncertainty values of the edges/surfaces are determined based on interpolation between neighbouring nodes.

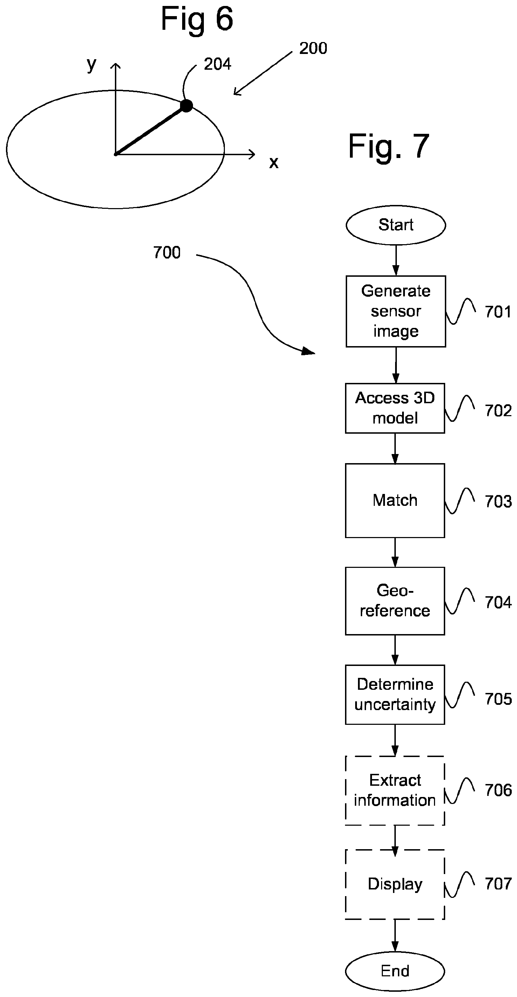

In Fig 6, an uncertainty associated to the mesh is illustrated. A value 204 for the mesh uncertainty is given in at least two directions. In the illustrated example, the mesh uncertainty value 204 is given in two dimensions. The uncertainty value in each direction is represented as a distance or another value related to the distance. In one example, the uncertainty is represented as a value and possibly also direction in the plane of the surface and as a value in a direction perpendicular to the plane of the surface. In accordance with this example, each uncertainty is represented in relation to the associated local plane given by the surface of the mesh. When the uncertainty is given in space, the uncertainty defines a sphere, the size and shape of which is given by the uncertainty value in each respective direction. In one example when the mesh uncertainty is given in three dimensions, it is represented as a 3x3 matrix. In one example when the mesh uncertainty is given in two dimensions, it is represented as a 2x2 matrix. In an alternative example, the mesh uncertainty is given as a percentage associated to substantially each node/edge/surface of the mesh.

Thus, the mesh is associated to mesh uncertainties. The mesh uncertainties can be illustrated. For example the uncertainties can be illustrated by means of colour coding of the mesh. For example, the texture can then be removed and replaced with the colour coding based on the mesh uncertainties. It is then illustrated in which parts of the model the mesh uncertainties are acceptable and in which parts they are not. It is then possible for a user of the model to know where in the geography the model is more reliable and where it is less reliable and also providing a measure of the reliability. In one example, the texture of the mesh can be presented along with the mesh uncertainties. In one example, the texture is presented in black and white. The texture may be presented in a semi-transparent manner. In determining the measure related to an uncertainty in the matching between the sensor image and the 3D model, the uncertainty associated to the mesh can be taken into account.

In Fig 7, a method 700 for geo-referencing at least one sensor image comprises the following steps.
- matching the sensor image with the 3D model to find a section of the 3D model where there is a match between the first and the second scenes,
- geo-referencing the sensor image based on the geo-coded 3D coordinate data of the found section of the 3D model, and
- determining a measure related to an uncertainty in the matching between the sensor image and the 3D model.

In a first step 701, at least one sensor image of a first scene is generated with at least one sensor. In one example, the sensor image comprises a depth map.

In a next step 702, information related to at least one second scene is accessed, said second scene encompassing said first scene. This step involves accessing a 3D model comprising geo-coded 3D coordinate data. In one example, the 3D model comprises coordinate data given in a geo-referenced coordinate system. The 3D model may be textured.

Thereafter, the sensor image is matched 703 with the 3D model to find a section of the 3D model where there is a match between the first and the second scenes. The matching involves in one example positioning and rotating the sensor image in the 3D model and changing intrinsic parameters such as field of view and/or radial distortion.. The matching may involve matching texture information of the sensor image with texture information related to the second scene.

The sensor image is then geo-referenced 704. The geo-referencing comprises using geo-coded 3D coordinate data of the found section of the 3D model and associating said geo-coded 3D coordinate data to the corresponding part of the sensor image.

Thereafter, a measure related to an uncertainty in the matching between the sensor image and the 3D model is determined 705. In one example, the measure related to the uncertainty in the matching is determined as a distance value. In an additional or complementary example, the measure related to the uncertainty in the matching is determined as a percentage. The measure related to the uncertainty in the matching may be determined for the sensor image as a whole. Alternatively, or in addition thereto, the measure related to the uncertainty is provided for each of at least one point in the sensor image.

In the illustrated example, the method further comprises a step of extracting 706 coordinate information and the associated measure related to the uncertainty related to a selected point in the sensor image.

The method may further comprise a step 707 of displaying the sensor image. Selecting means can then be used for selecting at least one point in the sensor image. Coordinate information and the associated measure related to the uncertainty related to this selected point in the sensor image can then be extracted and displayed.

The step of determining 705 a measure related to an uncertainty in the matching between the sensor image and the 3D model comprises in one example determining a similarity between the sensor image and the found section of the 3D model, determining similarities between the sensor image and sections of the model adjacent to the found section and determining the measure related to the uncertainty based on a comparison between the determined similarities.

The step of determining 705 a measure related to an uncertainty in the matching between the sensor image and the 3D model comprises in one example comparing substantially all points in the sensor image with a corresponding point in the model and forming an accuracy measure based on the distance between each respective point in the sensor image and the corresponding point in the model.

The step of determining 705 a measure related to an uncertainty in the matching between the sensor image and the 3D model comprises in one example comparing the sensor image with the corresponding section in the 3D model and determining a probability that the matching between the model and the sensor image is correct.

The step of determining 705 a measure related to an uncertainty in the matching between the sensor image and the 3D model comprises in one example comparing at least one point in the sensor image with a corresponding point in the 3D model and forming the measure related to the uncertainty based on the distance between the at least one point in the sensor image and the corresponding point in the model.

## Claims

1. Method (700) for geo-referencing at least one sensor image, said method comprising the steps of
- generating (701) said at least one sensor image of a first scene with at least one sensor arranged at a sensor carrier (201),
- determining the position of the sensor carrier (201) in a geo-referenced coordinate system
- accessing (702) a 3D model of the environment comprising geo-coded 3D coordinate data and related to at least one second scene, said second scene encompassing said first scene, wherein the size of the second scene is selected based on an uncertainty of the determined position of the carrier such that it is ensured that the second scene encompasses the first scene,
- matching (703) the sensor image with the 3D model to find a section of the 3D model where there is a match between the first and the second scenes,
- geo-referencing (704 ) the sensor image based on the geo-coded 3D coordinate data of the found section of the 3D model, and
- determining (705) a measure related to an uncertainty in the matching between the sensor image and the 3D model,
***wherein***
the 3D model of the environment comprises a mesh describing the environment wherein each node of the mesh is associated to geo-coded 3D coordinate data and wherein at least a subset of the nodes are associated to a mesh uncertainty, wherein the mesh uncertainty represents the uncertainty at that specific node ,of the model in at least two dimensions,
the 3D model is textured,
the matching involves matching texture information of the sensor image with texture information of the textured 3D model related to the second scene, and
the determining of the measure related to the uncertainty in the matching between the sensor image and the 3D model, takes into account the uncertainty associated with the mesh.

2. Method according to claim 1, wherein the matching (703) involves positioning and rotating the sensor image in the 3D model and changing intrinsic parameters such as field of view and/or radial distortion.

3. Method according to any of the preceding claims, wherein the measure related to the uncertainty in the matching is determined (705) for the sensor image as a whole.

4. Method according to claim 3, wherein the measure related to the uncertainty in the matching is determined as a distance value or a percentage.

5. Method according to any of the claims 3 to 4, comprising determining a similarity between the sensor image and the found section of the 3D model, determining similarities between the sensor image and sections of the model adjacent to the found section and determining (705) the measure related to the uncertainty based on a comparison between the determined similarities.

6. Method according to any of the preceding claims, wherein the determination (705) of the measure related to an uncertainty comprises comparing the sensor image with the corresponding section in the 3D model and determining a probability that the matching between the model and the sensor image is correct.

7. Method according to any of the preceding claims, wherein the measure related to an uncertainty is provided for each of at least one point in the sensor image.

8. Method according to any of the preceding claims, further comprising a step of extracting (706) coordinate information and the associated measure related to the uncertainty related to a selected point in the sensor image.

9. Method according to any of the preceding claims, wherein the geo-coded 3D coordinate data is given in a geo-referenced coordinate system.

10. Computer program comprising a program code for geo-referencing at least one sensor image, comprising the step of:
- generating said at least one sensor image of a first scene with at least one sensor,
- determining the position of the sensor carrier in a geo-referenced coordinate system,
- accessing a 3D model of the environment comprising geo-coded 3D coordinate data and related to at least one second scene, said second scene encompassing said first scene, - wherein the size of the second scene is selected based on an uncertainty of the determined position of the carrier such that it is ensured that the second scene encompasses the first scene,
- matching the sensor image with the 3D model find a section of the 3D model where there is a match between the first and the second scenes,
- geo-referencing the sensor image based on the geo-coded 3D coordinate data of the found section of the 3D model, and
- determining a measure related to an uncertainty in the matching between the sensor image and the 3D model,
***wherein***
the 3D model of the environment comprises a mesh describing the environment, wherein each node is associated to geo-coded 3D coordinate data wherein at least a subset of the nodes are associated to a mesh uncertainty, wherein the mesh uncertainty represents the uncertainty at that specific node of the model in at least two dimensions,
the 3D model is textured
the matching involves matching texture information of the sensor image with texture information of the textured 3D model related to the second scene, and
the determining of the measure related to the uncertainty in the matching between the sensor image and the 3D model, takes into account the uncertainty associated with the mesh.

11. System (200) for geo-referencing at least one sensor image, said system comprising:
- a sensor carrier carrying at least one sensor (203) arranged to capture at least one image of a first scene,
- a position module (208) arranged to determine the position of the sensor carrier in a geo-referenced coordinate system,
- means (204) for accessing a 3D model comprising geo-coded 3D coordinate data and related to at least one second scene, said second scene encompassing said first scene, - wherein the size of the second scene is selected based on an uncertainty of the determined position of the carrier such that it is ensured that the second scene encompasses the first scene,
and
- a processing unit (205) arranged to accessing the 3D model, to match the sensor image with the 3D model so as to find a section of the 3D model where there is a match between the first and the second scenes, to geo-reference the sensor image based on the geo-coded 3D coordinate data of the found section of the 3D model, and to determine a measure related to an uncertainty in the matching between the sensor image and the 3D model,
***wherein***
the 3D model of the environment comprises a mesh describing the environment, wherein each node is associated to geo-coded 3D coordinate data, wherein at least a subset of the nodes are associated to a mesh uncertainty, and wherein the mesh uncertainty represents the uncertainty at that specific node of the model in at least two dimensions,
the 3D model is textured
the matching involves matching texture information of the sensor image with texture information of the textured 3D model related to the second scene, and
the determining of the measure related to the uncertainty in the matching between the sensor image and the 3D model, takes into account the uncertainty associated with the mesh.

12. The system according to claim 11, wherein equipment of the position module (208) for determining the position of the sensor carrier (201) comprises a GPS receiver and/or accelerometers and/or gyros.

13. The system according to claim 11 or 12, wherein the position module (208) is further arranged to provide information related to a moving direction of the sensor carrier and/or a pointing direction of the at least one sensor.

14. The system according to claim 13, wherein determining a pointing direction of the sensor(s) /203) is based on information from accelerometers and/or gyros.

15. The system according to any of the claims 11 - 14, wherein the positioning module comprises a user input module for manual input of information related to the position of the sensor carrier and/or the pointing direction of the sensor.

## Patentansprüche

1. Verfahren (700) zum Georeferenzieren mindestens eines Sensorbildes, wobei das Verfahren die folgenden Schritte umfasst:
- Erzeugen (701) des mindestens einen Sensorbildes einer ersten Szene mit mindestens einem Sensor, der an einem Sensorträger (201) angeordnet ist,
- Bestimmen der Position des Sensorträgers (201) in einem georeferenzierten Koordinatensystem
- Zugreifen (702) auf ein 3D-Modell der Umgebung, das geokodierte 3D-Koordinatendaten umfasst und sich auf mindestens eine zweite Szene bezieht, wobei die zweite Szene die erste Szene umschließt, wobei die Größe der zweiten Szene basierend auf einer Unsicherheit der bestimmten Position des Trägers derart ausgewählt ist, dass sichergestellt ist, dass die zweite Szene die erste Szene umschließt,
- Abgleichen (703) des Sensorbildes mit dem 3D-Modell, um einen Abschnitt des 3D-Modells zu finden, wo es eine Übereinstimmung zwischen der ersten und der zweiten Szene gibt,
- Georeferenzieren (704) des Sensorbildes basierend auf den geokodierten 3D-Koordinatendaten des gefundenen Abschnitts des 3D-Modells und
- Bestimmen (705) eines Maßes in Bezug auf eine Unsicherheit bei dem Abgleichen zwischen dem Sensorbild und dem 3D-Modell,
***wobei***
das 3D-Modell der Umgebung ein Gitter umfasst, das die Umgebung beschreibt, wobei jeder Knoten des Gitters mit den geokodierten 3D-Koordinatendaten verknüpft ist und wobei mindestens eine Untergruppe der Knoten mit einer Gitterunsicherheit verknüpft ist, wobei die Gitterunsicherheit die Unsicherheit an diesem spezifischen Knoten des Modells in mindestens zwei Dimensionen repräsentiert,
das 3D-Modell texturiert ist,
das Abgleichen Abgleichen von Texturinformationen des Sensorbildes mit Texturinformationen des texturierten 3D-Modells, das sich auf die zweite Szene bezieht, beinhaltet und das Bestimmen des Maßes in Bezug auf die Unsicherheit bei dem Abgleichen zwischen dem Sensorbild und dem 3D-Modell die Unsicherheit, die mit dem Gitter verknüpft ist, berücksichtigt.

2. Verfahren nach Anspruch 1, wobei das Abgleichen (703) Positionieren und Drehen des Sensorbildes in dem 3D-Modell sowie Verändern intrinsischer Parameter wie z. B. Sichtfeld und/oder radiale Verzerrung beinhaltet.

3. Verfahren nach einem der vorhergehenden Ansprüche, wobei das Maß in Bezug auf die Unsicherheit bei dem Abgleichen für das Sensorbild als Ganzes bestimmt (705) wird.

4. Verfahren nach Anspruch 3, wobei das Maß in Bezug auf die Unsicherheit bei dem Abgleichen als Distanzwert oder ein Prozentsatz bestimmt wird.

5. Verfahren nach einem der Ansprüche 3 bis 4, umfassend Bestimmen einer Ähnlichkeit zwischen dem Sensorbild und dem gefundenen Abschnitt des 3D-Modells, Bestimmen von Ähnlichkeiten zwischen dem Sensorbild und Abschnitten des Modells, die an den gefundenen Abschnitt angrenzen, und Bestimmen (705) des Maßes in Bezug auf die Unsicherheit basierend auf einem Vergleich zwischen den bestimmten Ähnlichkeiten.

6. Verfahren nach einem der vorhergehenden Ansprüche, wobei die Bestimmung (705) des Maßes in Bezug auf eine Unsicherheit Vergleichen des Sensorbildes mit dem entsprechenden Abschnitt in dem 3D-Modell und Bestimmen einer Wahrscheinlichkeit, dass das Abgleichen zwischen dem Modell und dem Sensorbild korrekt ist, umfasst.

7. Verfahren nach einem der vorhergehenden Ansprüche, wobei das Maß in Bezug auf eine Unsicherheit für jeden von mindestens einem Punkt in dem Sensorbild bereitgestellt wird.

8. Verfahren nach einem der vorhergehenden Ansprüche, ferner umfassend einen Schritt von Extrahieren (706) von Koordinateninformationen und des verknüpften Maßes in Bezug auf die Unsicherheit in Bezug auf einen ausgewählten Punkt in dem Sensorbild.

9. Verfahren nach einem der vorhergehenden Ansprüche, wobei die geokodierten 3D-Koordinatendaten in einem georeferenzierten Koordinatensystem gegeben sind.

10. Computerprogramm, umfassend einen Programmcode zum Georeferenzieren mindestens eines Sensorbildes, umfassend die folgenden Schritte:
- Erzeugen des mindestens einen Sensorbildes einer ersten Szene mit mindestens einem Sensor,
- Bestimmen der Position des Sensorträgers in einem georeferenzierten Koordinatensystem,
- Zugreifen auf ein 3D-Modell der Umgebung, das geokodierte 3D-Koordinatendaten umfasst und sich auf mindestens eine zweite Szene bezieht, wobei die zweite Szene die erste Szene umschließt, - wobei die Größe der zweiten Szene basierend auf einer Unsicherheit der bestimmten Position des Trägers derart ausgewählt ist, dass sichergestellt ist, dass die zweite Szene die erste Szene umschließt,
- Abgleichen des Sensorbildes mit dem 3D-Modell Finden eines Abschnitts des 3D-Modells, wo es eine Übereinstimmung zwischen der ersten und der zweiten Szene gibt,
- Georeferenzieren des Sensorbildes basierend auf den geokodierten 3D-Koordinatendaten des gefundenen Abschnitts des 3D-Modells und
- Bestimmen eines Maßes in Bezug auf eine Unsicherheit bei dem Abgleichen zwischen dem Sensorbild und dem 3D-Modell,
***wobei***
das 3D-Modell der Umgebung ein Gitter umfasst, das die Umgebung beschreibt, wobei jeder Knoten mit geokodierten 3D-Koordinatendaten verknüpft ist, wobei mindestens eine Untergruppe der Knoten mit einer Gitterunsicherheit verknüpft ist, wobei die Gitterunsicherheit die Unsicherheit an diesem spezifischen Knoten des Modells in mindestens zwei Dimensionen repräsentiert,
das 3D-Modell texturiert ist
das Abgleichen Abgleichen von Texturinformationen des Sensorbildes mit Texturinformationen des texturierten 3D-Modells, das sich auf die zweite Szene bezieht, beinhaltet und das Bestimmen des Maßes in Bezug auf die Unsicherheit bei dem Abgleichen zwischen dem Sensorbild und dem 3D-Modell die Unsicherheit, die mit dem Gitter verknüpft ist, berücksichtigt.

11. System (200) zum Georeferenzieren mindestens eines Sensorbildes, wobei das System Folgendes umfasst:
- einen Sensorträger, der mindestens einen Sensor (203) trägt, der dazu angeordnet ist, mindestens ein Bild einer ersten Szene aufzunehmen,
- ein Positionsmodul (208), das dazu angeordnet ist, die Position des Sensorträgers in einem georeferenzierten Koordinatensystem zu bestimmen,
- Mittel (204) zum Zugreifen auf ein 3D-Modell, das geokodierte 3D-Koordinatendaten umfasst und sich auf mindestens eine zweite Szene bezieht, wobei die zweite Szene die erste Szene umschließt, - wobei die Größe der zweiten Szene basierend auf einer Unsicherheit der bestimmten Position des Trägers derart ausgewählt ist, dass sichergestellt ist, dass die zweite Szene die erste Szene umschließt,
und
- eine Verarbeitungseinheit (205), die dazu angeordnet ist, auf das 3D-Modell zuzugreifen, um das Sensorbild mit dem 3D-Modell abzugleichen, um einen Abschnitt des 3D-Modells zu finden, wo es eine Übereinstimmung zwischen der ersten und der zweiten Szene gibt, um das Sensorbild basierend auf den geokodierten 3D-Koordinatendaten des gefundenen Abschnitts des 3D-Modells zu georeferenzieren und um ein Maß in Bezug auf eine Unsicherheit bei dem Abgleichen zwischen dem Sensorbild und dem 3D-Modell zu bestimmen,
***wobei***
das 3D-Modell der Umgebung ein Gitter umfasst, das die Umgebung beschreibt, wobei jeder Knoten mit geokodierten 3D-Koordinatendaten verknüpft ist, wobei mindestens eine Untergruppe der Knoten mit einer Gitterunsicherheit verknüpft ist und wobei die Gitterunsicherheit die Unsicherheit an diesem spezifischen Knoten des Modells in mindestens zwei Dimensionen repräsentiert,
das 3D-Modell texturiert ist
das Abgleichen Abgleichen von Texturinformationen des Sensorbildes mit Texturinformationen des texturierten 3D-Modells, das sich auf die zweite Szene bezieht, beinhaltet und das Bestimmen des Maßes in Bezug auf die Unsicherheit bei dem Abgleichen zwischen dem Sensorbild und dem 3D-Modell die Unsicherheit, die mit dem Gitter verknüpft ist, berücksichtigt.

12. System nach Anspruch 11, wobei Ausrüstung des Positionsmoduls (208) zum Bestimmen der Position des Sensorträgers (201) einen GPS-Empfänger und/oder Beschleunigungsmessgeräte und/oder Kreisel umfasst.

13. System nach Anspruch 11 oder 12, wobei das Positionsmodul (208) ferner dazu angeordnet ist, Informationen in Bezug auf eine Bewegungsrichtung des Sensorträgers und/oder eine Zeigerichtung des mindestens einen Sensors bereitzustellen.

14. System nach Anspruch 13, wobei das Bestimmen einer Zeigerichtung des/der Sensors/-en /203) auf Informationen von Beschleunigungsmessgeräten und/oder Kreiseln basiert.

15. System nach einem der Ansprüche 11 - 14, wobei das Positioniermodul ein Nutzereingabemodul zur manuellen Eingabe von Informationen in Bezug auf die Position des Sensorträgers und/oder der Zeigerichtung des Sensors umfasst.

## Revendications

1. Procédé (700) de géo-référencement d'au moins une image de capteur, ledit procédé comprenant les étapes consistant à :
- générer (701) ladite au moins une image de capteur d'une première scène avec au moins un capteur agencé au niveau d'un support de capteur (201),
- déterminer la position du support de capteur (201) dans un système de coordonnées géo-référencé,
- accéder (702) à un modèle 3D de l'environnement comprenant des données de coordonnées 3D géo-codées et lié à au moins une seconde scène, ladite seconde scène englobant ladite première scène, dans lequel la taille de la seconde scène est sélectionnée sur la base d'une incertitude de la position déterminée du support de sorte qu'il est garanti que la seconde scène englobe la première scène,
- mettre en correspondance (703) l'image de capteur avec le modèle 3D pour trouver une section du modèle 3D où il existe une correspondance entre la première et la seconde scène,
- géo-référencer (704) l'image de capteur sur la base des données de coordonnées 3D géo-codées de la section trouvée du modèle 3D, et
- déterminer (705) une mesure liée à une incertitude dans la mise en correspondance entre l'image de capteur et le modèle 3D,
***dans lequel***
le modèle 3D de l'environnement comprend un maillage décrivant l'environnement, dans lequel chaque nœud du maillage est associé à des données de coordonnées 3D géo-codées et dans lequel au moins un sous-ensemble des nœuds sont associés à une incertitude de maillage, dans lequel l'incertitude de maillage représente l'incertitude au niveau de ce nœud spécifique du modèle dans au moins deux dimensions,
le modèle 3D est texturé,
la mise en correspondance implique la mise en correspondance d'informations de texture de l'image de capteur avec des informations de texture du modèle 3D texturé lié à la seconde scène, et
la détermination de la mesure liée à l'incertitude dans la mise en correspondance entre l'image de capteur et le modèle 3D prend en compte l'incertitude associée au maillage.

2. Procédé selon la revendication 1, dans lequel la mise en correspondance (703) implique le positionnement et la rotation de l'image de capteur dans le modèle 3D et le changement de paramètres intrinsèques tels que le champ de vision et/ou la distorsion radiale.

3. Procédé selon l'une quelconque des revendications précédentes, dans lequel la mesure liée à l'incertitude dans la mise en correspondance est déterminée (705) pour l'image de capteur dans son ensemble.

4. Procédé selon la revendication 3, dans lequel la mesure liée à l'incertitude dans la mise en correspondance est déterminée sous la forme d'une valeur de distance ou d'un pourcentage.

5. Procédé selon l'une quelconque des revendications 3 à 4, comprenant la détermination d'une similarité entre l'image de capteur et la section trouvée du modèle 3D, la détermination de similarités entre l'image de capteur et des sections du modèle adjacentes à la section trouvée et la détermination (705) de la mesure liée à l'incertitude sur la base d'une comparaison entre les similarités déterminées.

6. Procédé selon l'une quelconque des revendications précédentes, dans lequel la détermination (705) de la mesure liée à une incertitude comprend la comparaison de l'image de capteur avec la section correspondante dans le modèle 3D et la détermination d'une probabilité que la mise en correspondance entre le modèle et l'image de capteur soit correcte.

7. Procédé selon l'une quelconque des revendications précédentes, dans lequel la mesure liée à une incertitude est fournie pour chacun d'au moins un point dans l'image de capteur.

8. Procédé selon l'une quelconque des revendications précédentes, comprenant en outre une étape consistant à extraire (706) des informations de coordonnées et la mesure associée liée à l'incertitude liée à un point sélectionné dans l'image de capteur.

9. Procédé selon l'une quelconque des revendications précédentes, dans lequel les données de coordonnées 3D géo-codées sont données dans un système de coordonnées géo-référencé.

10. Programme informatique comprenant un code de programme pour le géo-référencement d'au moins une image de capteur, comprenant les étapes consistant à :
- générer ladite au moins une image de capteur d'une première scène avec au moins un capteur,
- déterminer la position du support de capteur dans un système de coordonnées géo-référencé,
- accéder à un modèle 3D de l'environnement comprenant des données de coordonnées 3D géo-codées et lié à au moins une seconde scène, ladite seconde scène englobant ladite première scène, dans lequel la taille de la seconde scène est sélectionnée sur la base d'une incertitude de la position déterminée du support de sorte qu'il est garanti que la seconde scène englobe la première scène,
- mettre en correspondance l'image de capteur avec le modèle 3D pour trouver une section du modèle 3D où il existe une correspondance entre la première et la seconde scène,
- géo-référencer l'image de capteur sur la base des données de coordonnées 3D géo-codées de la section trouvée du modèle 3D, et
- déterminer une mesure liée à une incertitude dans la mise en correspondance entre l'image de capteur et le modèle 3D,
***dans lequel***
le modèle 3D de l'environnement comprend un maillage décrivant l'environnement, dans lequel chaque nœud est associé à des données de coordonnées 3D géo-codées, dans lequel au moins un sous-ensemble des nœuds sont associés à une incertitude de maillage, dans lequel l'incertitude de maillage représente l'incertitude au niveau de ce nœud spécifique du modèle dans au moins deux dimensions,
le modèle 3D est texturé,
la mise en correspondance implique la mise en correspondance d'informations de texture de l'image de capteur avec des informations de texture du modèle 3D texturé lié à la seconde scène, et
la détermination de la mesure liée à l'incertitude dans la mise en correspondance entre l'image de capteur et le modèle 3D prend en compte l'incertitude associée au maillage.

11. Système (200) de géo-référencement d'au moins une image de capteur, ledit système comprenant :
- un support de capteur supportant au moins un capteur (203) agencé pour capturer au moins une image d'une première scène,
- un module de position (208) agencé pour déterminer la position du support de capteur dans un système de coordonnées géo-référencé,
- des moyens (204) pour accéder à un modèle 3D comprenant des données de coordonnées 3D géo-codées et lié à au moins une seconde scène, ladite seconde scène englobant ladite première scène, dans lequel la taille de la seconde scène est sélectionnée sur la base d'une incertitude de la position déterminée du support de sorte qu'il est garanti que la seconde scène englobe la première scène,
et
- une unité de traitement (205) agencée pour accéder au modèle 3D, pour mettre en correspondance l'image de capteur avec le modèle 3D de façon à trouver une section du modèle 3D où il existe une correspondance entre la première et la seconde scènes, pour géo-référencer l'image de capteur sur la base des données de coordonnées 3D géo-codées de la section trouvée du modèle 3D, et pour déterminer une mesure liée à une incertitude dans la mise en correspondance entre l'image de capteur et le modèle 3D,
***dans lequel***
le modèle 3D de l'environnement comprend un maillage décrivant l'environnement, dans lequel chaque nœud est associé à des données de coordonnées 3D géo-codées, dans lequel au moins un sous-ensemble des nœuds sont associés à une incertitude de maillage, et dans lequel l'incertitude de maillage représente l'incertitude au niveau de ce nœud spécifique du modèle dans au moins deux dimensions,
le modèle 3D est texturé
la mise en correspondance implique la mise en correspondance d'informations de texture de l'image de capteur avec des informations de texture du modèle 3D texturé lié à la seconde scène, et
la détermination de la mesure liée à l'incertitude dans la mise en correspondance entre l'image de capteur et le modèle 3D prend en compte l'incertitude associée au maillage.

12. Système selon la revendication 11, dans lequel l'équipement du module de position (208) pour déterminer la position du support de capteur (201) comprend un récepteur GPS et/ou des accéléromètres et/ou des gyroscopes.

13. Système selon la revendication 11 ou 12, dans lequel le module de position (208) est en outre agencé pour fournir des informations liées à une direction de déplacement du support de capteur et/ou à une direction de pointage de l'au moins un capteur.

14. Système selon la revendication 13, dans lequel la détermination d'une direction de pointage de l'un ou plusieurs capteurs (203) est basée sur des informations provenant d'accéléromètres et/ou de gyroscopes.

15. Système selon l'une quelconque des revendications 11 à 14, dans lequel le module de positionnement comprend un module d'entrée d'utilisateur pour une entrée manuelle d'informations liées à la position du support de capteur et/ou à la direction de pointage du capteur.
